# EUROPEAN PATENT APPLICATION

(11) **EP 4 383 654 A1**
(43) Date of publication of application: **12.06.2024**
(21) Application number: 21952358.6
(22) Date of filing: 05.08.2021
(51) Int. Cl.: H04L 12/18, H04W 4/06, H04W 8/18, H04W 72/12

(54) **SEMI-PERSISTENT SCHEDULING METHOD AND APPARATUS FOR MULTICAST BROADCAST SERVICE (MBS)**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2021/111039
(87) International publication number: WO 2023/010474

(57) **Abstract**

Disclosed in the embodiments of the present application are a semi-persistent scheduling method and apparatus for a multicast broadcast service (MBS). The method comprises: receiving configuration information, which is sent by a network device, for semi-persistent scheduling of an MBS; and activating or deactivating a semi-persistent resource for the MBS according to the configuration information. By means of the present application, a terminal device may receive MBS data by means of a semi-persistent scheduling resource and according to different service characteristics, such that when the terminal device receives an MBS, the loss of dynamic scheduling signaling may be reduced, and the reception delay of data may also be reduced.

## Description

### FIELD

The present disclosure relates to the technical field of communications, and more particularly to a method for semi-persistent scheduling of a multicast broadcast service (MBS), and an apparatus for semi-persistent scheduling of a multicast broadcast service (MBS).

### BACKGROUND

When a network device sends multiple multicast broadcast services (MBSs) to a terminal device, the terminal device needs to configure a semi-persistently scheduled resource, so that the terminal device may receive MBS data via the semi-persistently scheduled resource according to different service characteristics. In related technologies, when a terminal device receives an MBS, the loss of a dynamic scheduling signaling or the delay of service data reception may occur.

### SUMMARY

Embodiments of the present disclosure provide a method for semi-persistent scheduling of a multicast broadcast service (MBS), and an apparatus for semi-persistent scheduling of a multicast broadcast service (MBS), which may be applied to a scenario where a network device sends an MBS to a terminal device. The terminal device needs to configure a semi-persistently scheduled resource, so that the terminal device may receive MBS data through the semi-persistently scheduled resource according to different characteristics. Thus, when the terminal device receives the MBS, the loss of a dynamic scheduling signaling may be reduced, and the reception delay of data may be reduced at the same time.

In a first aspect, an embodiment of the present disclosure provides a method for semi-persistent scheduling of a multicast broadcast service (MBS), which is performed by a terminal device. The method includes receiving configuration information for the semi-persistent scheduling of the MBS sent by a network device, and activating or deactivating a semi-persistent resource of the MBS according to the configuration information.

The present disclosure provides the method for semi-persistent scheduling of a multicast broadcast service (MBS). The terminal device receives the configuration information for the semi-persistent scheduling of the MBS sent by network device, and activate or deactivate the semi-persistent resources of the MBS according to the configuration information. According to the present disclosure, the terminal device may receive MBS data through a semi-persistently scheduled resource according to different service characteristics. Thus, when the terminal device receives the MBS, the loss of a dynamic scheduling signaling may be reduced, and the reception delay of data may be reduced at the same time.

In an implementation, the method for semi-persistent scheduling of the multicast broadcast service (MBS) further includes monitoring an indication signaling of the MBS sent by the network device according to the configuration information. The indication signaling is configured to indicate the terminal device to activate or deactivate the semi-persistent resource.

In an implementation, the method for semi-persistent scheduling of the multicast broadcast service (MBS) further includes determining one or multiple candidate semi-persistent resource sets according to first configuration information, in which the configuration information includes the first configuration information used to configure the semi-persistent resource, and activating or deactivating a semi-persistent resource set indicated by the indication signaling. The semi-persistent resource set is one or more of the one or multiple candidate semi-persistent resource sets.

In an implementation, the method for semi-persistent scheduling of the multicast broadcast service (MBS) further includes determining an identification of the semi-persistent resource set indicated by the indication signaling, in which one or more identifications exist, and activating or deactivating each semi-persistent resource according to the identification of the semi-persistent resource set.

In an implementation, the method for semi-persistent scheduling of the multicast broadcast service (MBS) further includes determining a group identification of a semi-persistent resource set group indicated by the indication signaling, in which the semi-persistent resource set group includes at least one semi-persistent resource set, and activating or deactivating each semi-persistent resource set included in the semi-persistent resource set group according to the group identification.

In an implementation, the identification of the semi-persistent resource set is a list item number in a semi-persistent resource set list.

In an implementation, the group identification of the semi-persistent resource set group is a list item number in a semi-persistent resource set group list.

In an implementation, the method for semi-persistent scheduling of the multicast broadcast service (MBS) further includes determining the identification or the group identification from a bit. The bit is one of a reserved bit and a bit in a hybrid automatic repeat request (HARQ) process number field, and the indication signaling is downlink control information (DCI).

In an implementation, the method for semi-persistent scheduling of the multicast broadcast service (MBS) further includes directly acquiring the identification or the group identification from the bit in the HARQ process number field, in case that the bit is the bit in the HARQ process number field, or determining a HARQ process number from the bit in the HARQ process number field, and determining the identification or the group identification according to the HARQ process number.

In an implementation, monitoring the indication signaling of the MBS sent by the network device according to the configuration information includes monitoring the indication signaling according to second configuration information. The configuration information includes the second configuration information for the indication signaling for activating or deactivating the semi-persistent resource.

In an implementation, the method for semi-persistent scheduling of the multicast broadcast service (MBS) further includes determining an identification of the indication signaling according to the second configuration information, and monitoring the indication signaling according to the identification of the indication signaling.

In an implementation, the method for semi-persistent scheduling of the multicast broadcast service (MBS) further includes determining a discontinuous reception configuration of the indication signaling according to the second configuration information, and monitoring the indication signaling according to the discontinuous reception configuration.

In an implementation, the method for semi-persistent scheduling of the multicast broadcast service (MBS) further includes determining a discontinuous reception cycle according to the discontinuous reception configuration, and monitoring the indication signaling within a reception duration in the discontinuous reception cycle.

In an implementation, the method for semi-persistent scheduling of the multicast broadcast service (MBS) further includes determining a time domain reception graph within the reception duration according to the discontinuous reception configuration, and determining a monitoring time slot corresponding to the indication signaling according to the time domain reception graph, and monitoring the indication signaling in the monitoring time slot.

In an implementation, the configuration information includes an identification of the MBS, first configuration information of the semi-persistent resource, and second configuration information for the indication signaling for activating or deactivating the semi-persistent resource.

In an implementation, the second configuration information includes an identification of the indication signaling and a discontinuous reception configuration for monitoring the indication signaling.

In an implementation, the discontinuous reception configuration includes a discontinuous reception cycle and a reception duration in the discontinuous reception cycle.

In an implementation, the discontinuous reception configuration includes a time domain reception graph within the reception duration. The time domain reception graph includes a monitoring time slot corresponding to the indication signaling and an occupied time slot corresponding to the semi-persistent resource.

In a second aspect, an embodiment of the present disclosure provides another method for semi-persistent scheduling of a multicast broadcast service (MBS), which is performed by a network device. The method includes sending configuration information for the semi-persistent scheduling of the MBS to a terminal device. An activation state of a semi-persistent resource of the MBS is determined by the terminal device according to the configuration information.

In an implementation, the method for semi-persistent scheduling of the multicast broadcast service (MBS) further includes sending an indication signaling of the MBS to the terminal device. The indication signaling is configured to indicate the terminal device to activate or deactivate the semi-persistent resource.

In an implementation, the configuration information includes an identification of the MBS, first configuration information of the semi-persistent resource, and second configuration information for the indication signaling for activating or deactivating the semi-persistent resource.

In an implementation, the second configuration information includes an identification of the indication signaling and a discontinuous reception configuration for monitoring the indication signaling.

In an implementation, the discontinuous reception configuration includes a discontinuous reception cycle and a reception duration in the discontinuous reception cycle.

In an implementation, the discontinuous reception configuration includes a time domain reception graph within the reception duration. The time domain reception graph includes a monitoring time slot corresponding to the indication signaling and an occupied time slot corresponding to the semi-persistent resource.

In an implementation, the first configuration information includes one or multiple candidate semi-persistent resource sets. The method further includes sending a first indication signaling indicating an identification of at least one semi-persistent resource set to the terminal device, in which the first indication signaling is configured to indicate the terminal device to activate or deactivate each semi-persistent resource set, in which the semi-persistent resource set is one or more of the one or multiple candidate semi-persistent resource sets, or sending a second indication signaling indicating a group identification of a semi-persistent resource set group to the terminal device. The semi-persistent resource set group includes at least one semi-persistent resource set. The second indication signaling is configured to indicate the terminal device to activate or deactivate each semi-persistent resource set included in the semi-persistent resource set group.

In an implementation, the method for semi-persistent scheduling of the multicast broadcast service (MBS) further includes explicitly or implicitly configuring the identification of the semi-persistent resource set and the group identification of the semi-persistent resource set group.

In an implementation, the implicitly configuring includes configuring a list item number in a semi-persistent resource set list as the identification of the semi-persistent resource set, or configuring a list item number in a semi-persistent resource set group list as the group identification of the semi-persistent resource set group.

In an implementation, the method for semi-persistent scheduling of the multicast broadcast service (MBS) further includes carrying the identification or the group identification on a bit. The bit is one of a reserved bit and a bit in a hybrid automatic repeat request (HARQ) process number field, and the indication signaling is downlink control information (DCI).

In an implementation, the method for semi-persistent scheduling of the multicast broadcast service (MBS) further includes directly carrying the identification or the group identification on the bit in the HARQ process number field, in case that the bit in the HARQ process number field is taken as the bit, or carrying a HARQ process number on the bit in the HARQ process number field. The HARQ process number is used by the terminal device for determining the identification or the group identification.

In a third aspect, an embodiment of the present disclosure provides a terminal device. The terminal device has some or all of functions of the terminal device to implement the method described in the first aspect above. For example, functions of the terminal device may be provided with functions of some or all of embodiments of the present disclosure, or may be provided with functions of implementing any one of the embodiments of the present disclosure alone. The functions may be implemented by hardware, or may be implemented by hardware executing corresponding software. The hardware or software includes one or more units or modules corresponding to the above-mentioned functions.

In an implementation, a structure of the terminal device may include a transceiver module and a processing module. The processing module is configured to support the terminal device to perform corresponding functions in the above-mentioned method. The transceiver module is configured to support a communication between the terminal device and other devices. The terminal device may further include a storage module. The storage module is configured to be coupled with the transceiver module and the processing module, and store necessary computer programs and data of the terminal device.

In an example, the processing module may be a processor, the transceiver module may be a transceiver or a communication interface, and the storage module may be a memory.

In a fourth aspect, an embodiment of the present disclosure provides a network device. The network device has some or all of functions of the network device to implement the method described in the second aspect above. For example, functions of the network device may be provided with functions of some or all of embodiments of the present disclosure, or may be provided with functions of implementing any one of the embodiments of the present disclosure alone. The functions may be implemented by hardware, or may be implemented by hardware executing corresponding software. The hardware or software includes one or more units or modules corresponding to the above-mentioned functions.

In an implementation, a structure of the network device may include a transceiver module. The transceiver module is configured to support a communication between the network device and other devices. The network device may further include a storage module. The storage module is configured to be coupled with the transceiver module, and store necessary computer programs and data of the network device.

In an example, a processing module may be a processor, and the storage module may be a memory.

In a fifth aspect, an embodiment of the present disclosure provides a communication device. The communication device includes a processor that, when invoking a computer program in a memory, cause the method described in the first aspect to be implemented.

In a sixth aspect, an embodiment of the present disclosure provides a communication device. The communication device includes a processor that, when invoking a computer program in a memory, cause the method described in the second aspect to be implemented.

In a seventh aspect, an embodiment of the present disclosure provides a communication device. The communication device includes a processor, and a memory having stored therein computer programs. The processor is configured to execute the computer programs stored in the memory to cause the communication device to perform the method described in the first aspect.

In an eighth aspect, an embodiment of the present disclosure provides a communication device. The communication device includes a processor, and a memory having stored therein computer programs. The processor is configured to execute the computer programs stored in the memory to cause the communication device to perform the method described in the second aspect.

In a ninth aspect, an embodiment of the present disclosure provides a communication device. The communication device includes a processor and an interface circuit. The interface circuit is configured to receive code instructions and transmit the code instructions to the processor, and the processor is configured to execute the code instructions to cause the device to perform the method described in the first aspect.

In a tenth aspect, an embodiment of the present disclosure provides a communication device. The communication device includes a processor and an interface circuit. The interface circuit is configured to receive code instructions and transmit the code instructions to the processor, and the processor is configured to execute the code instructions to cause the device to perform the method described in the second aspect.

In an eleventh aspect, an embodiment of the present disclosure provides a communication system. The system includes a communication apparatus described in the third aspect and a communication apparatus described in the fourth aspect. Alternatively, the system includes the communication device described in the fifth aspect and the communication device described in the sixth aspect. Alternatively, the system includes the communication device described in the seventh aspect and the communication device described in the eighth aspect. Alternatively, the system includes the communication device described in the ninth aspect and the communication device described in the tenth aspect.

In a twelfth aspect, an embodiment of the present invention provides a computer-readable storage medium having stored therein instructions used for the terminal device that, when executed, cause the terminal device to perform the method described in the first aspect.

In a thirteenth aspect, an embodiment of the present invention provides a readable storage medium having stored therein instructions used for the network device that, when executed, cause the network device to perform the method described in the second aspect.

In a fourteenth aspect, the present disclosure also provides a computer program product. The computer program product includes a computer program that, when run on a computer, causes the computer to perform the method described in the first aspect.

In a fifteenth aspect, the present disclosure also provides a computer program product. The computer program product includes a computer program that, when run on a computer, causes the computer to perform the method described in the second aspect.

In a sixteenth aspect, the present disclosure provides a chip system. The chip system includes at least one processor and an interface, which is configured to support the terminal device to realize the functions involved in the first aspect, for example, determine or process at least one of data and information involved in the above-mentioned method. In a possible design, the chip system further includes a memory. The memory is configured to store necessary computer programs and data of the terminal device. The chip system may be composed of chips, and may also include chips and other discrete devices.

In a seventeenth aspect, the present disclosure provides a chip system. The chip system includes at least one processor and an interface, which is configured to support the network device to realize the functions involved in the second aspect, for example, determine or process at least one of data and information involved in the above-mentioned method. In a possible design, the chip system further includes a memory. The memory is configured to store necessary computer programs and data of the network device. The chip system may be composed of chips, and may also include chips and other discrete devices.

In an eighteenth aspect, the present disclosure provides a computer program that, when run on a computer, causes the computer to perform the method described in the first aspect.

In a nineteenth aspect, the present disclosure provides a computer program that, when run on a computer, causes the computer to perform the method described in the second aspect.

### BRIEF DESCRIPTION OF THE DRAWINGS

In order to more clearly illustrate technical solutions in embodiments of the present disclosure or the background, the following description will be given to the accompanying drawings, which are needed to be used in the embodiments of the present disclosure or the background.
FIG. 1 is a schematic diagram of a communication system provided in an embodiment of the present disclosure.
FIG. 2 is a flow chart of a method for semi-persistent scheduling of a multicast broadcast service (MBS) provided in an embodiment of the present disclosure.
FIG. 3 is a schematic diagram of monitoring an indication signaling of an MBS sent by a network device provided in an embodiment of the present disclosure.
FIG. 4 is a schematic diagram of a discontinuous reception configuration provided in an embodiment of the present disclosure.
FIG. 5 is a schematic diagram of a terminal device activating or deactivating a semi-persistent resource provided in an embodiment of the present disclosure.
FIG. 6 is a schematic diagram of a method in which an indication signaling is downlink control information (DCI) provided in an embodiment of the present disclosure.
FIG. 7 is a schematic diagram of sending configuration information for semi-persistent scheduling of an MBS to a terminal device provided in an embodiment of the present disclosure.
FIG. 8 is a schematic diagram of sending an indication signaling of an MBS to a terminal device provided in an embodiment of the present disclosure.
FIG. 9 is a schematic diagram of an indication signaling sent to a terminal device being downlink control information (DCI) provided in an embodiment of the present disclosure.
FIG. 10 is a schematic diagram of a communication device provided in an embodiment of the present disclosure.
FIG. 11 is a schematic diagram of another communication device provided in an embodiment of the present disclosure.
FIG. 12 is a schematic diagram of a chip provided in an embodiment of the present disclosure.

### DETAILED DESCRIPTION

Embodiments of the present disclosure are described in detail below, examples of which are illustrated in the accompanying drawings. The same or similar reference numerals represent the same or similar elements or elements having the same or similar functions throughout the descriptions. The embodiments described below with reference to the accompanying drawings are illustrative, and are intended to explain the present disclosure and cannot be construed as limiting the present disclosure.

For ease of understanding, terms involved in the present disclosure are firstly introduced.

### 1. Multicast Broadcast Service (MBS)

A multicast broadcast service (MBS) refers to a point to multipoint service in which a data source sends data to multiple users, so as to realize network resource sharing, including mobile core network and access network resource sharing, especially air interface resources. It may not only realize low-rate message multicast and broadcast of plain text, but also realize high-rate multimedia service broadcast and multicast.

### 2. Downlink Control Information (DCI)

DCI is carried by a physical downlink control channel (PDCCH). The DCI may include uplink and downlink resource allocation, hybrid automatic repeat request (HARQ) information, power control, etc. The PDCCH is a physical channel, which is configured to carry downlink scheduling information.

### 3. Radio Resource Control (RRC)

RRC, also referred to as radio resource management (RRM) or radio resource allocation (RRA), refers to performing radio resource management, control and scheduling via certain strategies and means, under the condition of meeting requirements of service quality, making full use of limited radio network resources as far as possible, ensuring reaching a planned coverage area, and improving service capacity and resource utilization as far as possible.

### 4. Physical Downlink Control Channel (PDCCH).

A PDCCH is used for a terminal device to send information related to uplink and downlink scheduling to a base station, specifically including such as transmission format, resource allocation, uplink scheduling permission, power control, and uplink retransmission information, etc.

### 5. Physical Downlink Shared Channel (PDSCH).

APDSCH is a downlink channel carrying primary user data.

### 6. Hybrid Automatic Repeat Request (HARQ)

A HARQ uses a forward error correction (FEC) code in combination with an automatic repeat-request (ARQ), which is referred to as a hybrid automatic repeat request.

In order to better understand a method for semi-persistent scheduling of a multicast broadcast service (MBS) disclosed in an embodiment of the present disclosure, a communication system applicable to the embodiments of the present disclosure will be firstly described below.

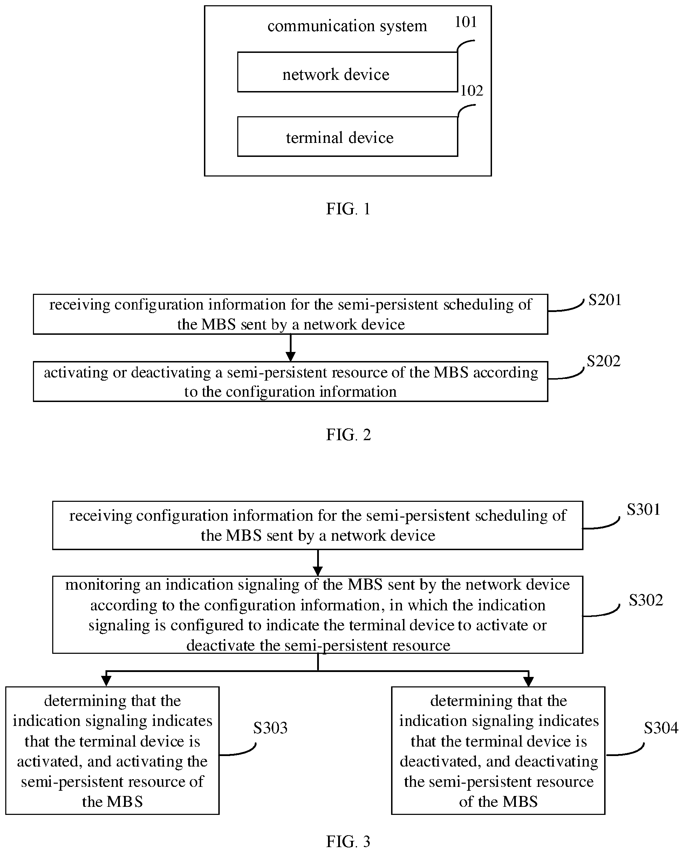

Referring to FIG. 1, FIG. 1 is a schematic diagram of a communication system provided in an embodiment of the present disclosure. The communication system may include, but is not limited to, one network device, and one terminal device. The number and form of devices shown in FIG. 1 are for illustration merely, and do not constitute a limitation of the embodiments of the present disclosure. In a practical application, the communication system may include two or more network devices, and two or more terminal devices. The communication system shown in FIG. 1 includes one network device 101 and one terminal device 102 as an example.

It is to be noted that the technical solution of the embodiments of the present disclosure may be applied to various communication systems, for example, a long term evolution (LTE) system, a 5th generation (5G) mobile communication system, a 5G new radio (NR) system, or other future new mobile communication systems, etc.

The network device 101 in the embodiments of the present disclosure is an entity on a network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system, etc. A specific technology and a specific device form adopted by the network device are not limited in the embodiments of the present disclosure. The network device provided in the embodiments of the present disclosure may be composed of a central unit (CU) and a distributed unit (DU). The CU may also be referred to as a control unit. A structure adopting a CU-DU may separate the network device, such as protocol layers of a base station, functions of part of the protocol layers are centralized controlled by the CU, functions of the remaining part or all of the protocol layers are distributed in the DU, and the DU is centrally controlled by the CU.

The terminal device 102 in the embodiments of the present disclosure is an entity on a user side configured to receive or transmitting signals, such as a mobile phone. A terminal may also be referred to as a terminal device, a user equipment (UE), a mobile station (MS), a mobile terminal (MT), and so on. The terminal may be a car with a communication function, a smart car, a mobile phone, a wearable device, a Pad, a computer with a wireless transceiver function, a virtual reality (VR) terminal, an augmented reality (AR) terminal, a wireless terminal in an industrial control, a wireless terminal in self-driving, a wireless terminal in a remote medical surgery, a wireless terminal in smart grid, a wireless terminal in transportation safety, a wireless terminal in a smart city, a wireless terminal in a smart home, etc. A specific technology and a specific device form adopted by the terminal are not limited in the embodiments of the present disclosure.

It may be understood that the communication system described in the embodiments of the present disclosure is to illustrate the technical solution of the embodiments of the present disclosure more clearly, and does not constitute a limitation of the technical solution provided in the embodiments of the present disclosure. It is known by those of ordinary skill in the art that with the evolution of a system architecture and the emergence of new business scenarios, the technical solution provided in the embodiments of the present disclosure is also applicable to similar technical problems.

It may be understood that multiple solutions in the embodiments of the present disclosure may be executed alone, or may be executed in combination, which is not limited in the present disclosure.

A method for semi-persistent scheduling of a multicast broadcast service (MBS), and an apparatus for semi-persistent scheduling of a multicast broadcast service (MBS) provided in the present disclosure are described in detail with reference to the accompanying drawings.

Referring to FIG. 2, FIG. 2 is a flow chart of a method for semi-persistent scheduling of a multicast broadcast service (MBS) provided in an embodiment of the present disclosure. The method is applied to a terminal device. As shown in FIG. 2, the method includes steps as follows.

In S201, configuration information for the semi-persistent scheduling of the MBS sent by a network device is received.

The multicast broadcast service (MBS) refers to a point to multipoint service in which a data source sends data to multiple users, so as to realize network resource sharing, including mobile core network and access network resource sharing, especially air interface resources. It may not only realize low-rate message multicast and broadcast of plain text, but also realize high-rate multimedia service broadcast and multicast.

The semi-persistent scheduling refers to that, after a terminal device applies for a semi-persistent resource once, corresponding semi-persistent resources are periodically allocated to the terminal device within a period of time.

In the present disclosure, to enable the terminal device to receive MBS data via a semi-persistently scheduled resource according to different service characteristics, the terminal device may receive the configuration information for the semi-persistent scheduling of the MBS sent by the network device.

Alternatively, the configuration information for the semi-persistent scheduling may include an identification of the MBS, first configuration information of the semi-persistent resource, and second configuration information for an indication signaling for activating or deactivating the semi-persistent resource.

The identification of the MBS may include a temporary mobile group identity (TMGI), an MBS session ID, and a MBS QoS flow ID.

In S202, a semi-persistent resource of the MBS is activated or deactivated according to the configuration information.

According to the above-mentioned obtained configuration information for the semi-persistent scheduling of the MBS sent by the network device, the semi-persistent resource corresponding to the MBS are acquired. Further, the indication signaling of the MBS sent by the network device may be determined according to the configuration information, and the terminal device may execute a process of activating the semi-persistent resource, or execute a process of deactivating the semi-persistent resource according to the indication signaling.

After activating a physical downlink shared channel (PDSCH) resource corresponding to the semi-persistent resource, the terminal device may receive a corresponding MBS via the PDSCH. Alternatively, the semi-persistent resource may be one or more resources.

The present disclosure provides the method for the semi-persistent scheduling of the multicast broadcast service (MBS). The terminal device receives the configuration information for the semi-persistent scheduling of the MBS sent by network device, and activate or deactivate the semi-persistent resource of the MBS according to the configuration information. In the present disclosure, the terminal device may receive the MBS data via the semi-persistently scheduled resource according to the different service characteristics. Thus, when the terminal device receives the MBS, the loss of a dynamic scheduling signaling may be reduced, and the reception delay of service data may be reduced at the same time.

Referring to FIG. 3, FIG. 3 is a flow chart of a method for semi-persistent scheduling of a multicast broadcast service (MBS) provided in an embodiment of the present disclosure. The method is applied to a terminal device. Based on the above-mentioned embodiment, as shown in FIG. 3, the method includes steps as follows.

In S301, configuration information for the semi-persistent scheduling of the MBS sent by a network device is received.

Regarding S301, the above-mentioned embodiment has been specifically introduced, which will not be elaborated herein.

In S302, an indication signaling of the MBS sent by the network device is monitored according to the configuration information. The indication signaling is configured to indicate the terminal device to activate or deactivate the semi-persistent resource.

As described in the above-mentioned embodiment, the configuration information for the semi-persistent scheduling may include an identification of the MBS, first configuration information of the semi-persistent resource, and second configuration information for the indication signaling for activating or deactivating the semi-persistent resource.

In some implementations, the second configuration information of the indication signaling may be determined according to the configuration information, and the indication signaling may be monitored according to the second configuration information. The indication signaling is configured to indicate the terminal device to execute a process of activating the semi-persistent resource, or execute a process of deactivating the semi-persistent resource. The second configuration information may include an identification of the indication signaling, and a discontinuous reception configuration for monitoring the indication signaling.

Alternatively, the identification of the indication signaling is determined according to the second configuration information, and the indication signaling is monitored according to the identification of the indication signaling. For example, the identification of the indication signaling may be a group - configured scheduling - radio network temporary identity (G-CS-RNTI) of a physical downlink control channel (PDCCH) for activating a corresponding semi-persistent scheduling (SPS) resource in the MBS.

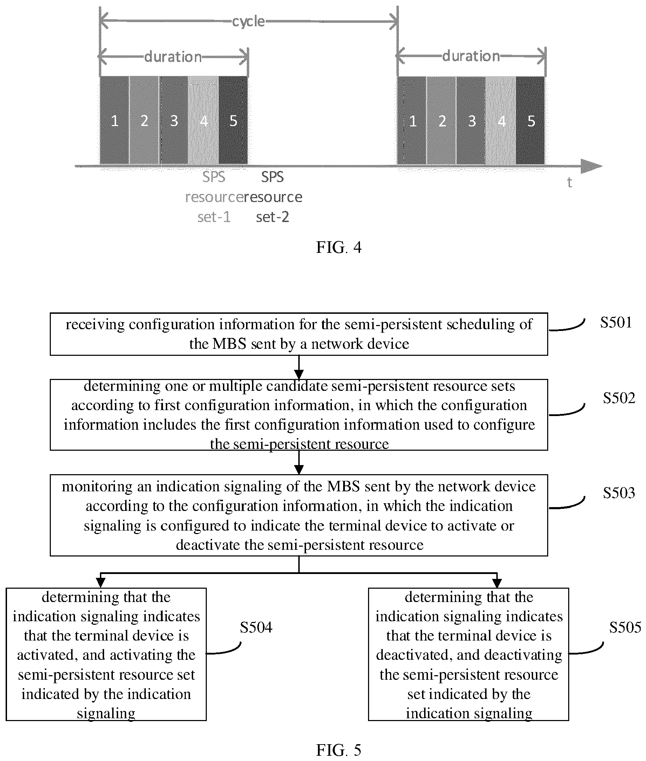

Alternatively, after the discontinuous reception configuration of the indication signaling is determined according to the second configuration information, a discontinuous reception cycle is determined according to the discontinuous reception configuration, and a time domain reception graph within a reception duration in the discontinuous reception cycle is determined. A monitoring time slot corresponding to the indication signaling is determined according to the time domain reception graph, and the indication signaling is monitored in the monitoring time slot. As shown in FIG. 4, the discontinuous reception configuration includes the discontinuous reception cycle and the reception duration in the discontinuous reception cycle. For example, the discontinuous reception cycle may be 10s, and the reception duration in the discontinuous reception cycle may be 5s. The discontinuous reception configuration also includes a time domain reception graph within the reception duration. The time domain reception graph includes a monitoring time slot corresponding to the indication signaling and an occupied time slot corresponding to the semi-persistent resource. As shown in FIG. 4, there are 5 time slots within the reception duration in the discontinuous reception cycle. Time slot 1 and time slot 3 represent monitoring time slots corresponding to the indication signaling, time slot 4 represents semi-persistent resource set 1, which is denoted as SPS resource set-1, and time slot 5 represents semi-persistent resource set 2, which is denoted as SPS resource set-2. Alternatively, the time domain reception graph may also be represented by a bit map, so a first bit represents a first time slot, and a value of "1" of the time slot indicates that the time slot needs to be monitored, and a value of "0" indicates that the time slot does not need to be monitored.

In S303, it is determined that the indication signaling indicates that the terminal device is activated, and the semi-persistent resource of the MBS is activated.

In response to the indication signaling indicating the terminal device to activate the semi-persistent resource, for example, the indication signaling for activating the semi-persistent resource is an activate command (CMD), the terminal device executes activating the semi-persistent resource.

In S304, it is determined that the indication signaling indicates that the terminal device is deactivated, and the semi-persistent resource of the MBS is deactivated.

Similar to the above-mentioned indication signaling indicating the terminal device to activate the semi-persistent resource, in response to the indication signaling indicating the terminal device to deactivate the semi-persistent resource, for example, the indication signaling for deactivating the semi-persistent resource is a deactivate CMD, the terminal device executes deactivating the semi-persistent resource.

The present disclosure provides the method for the semi-persistent scheduling of the multicast broadcast service (MBS). The terminal device receives the configuration information for the semi-persistent scheduling of the MBS sent by network device, and activate or deactivate the semi-persistent resource of the MBS according to the configuration information. In the present disclosure, the terminal device may receive the MBS data via the semi-persistently scheduled resource according to the different service characteristics. Thus, when the terminal device receives the MBS, the loss of the dynamic scheduling signaling may be reduced, and the reception delay of service data may be reduced at the same time.

Referring to FIG. 5, FIG. 5 is a flow chart of a method for semi-persistent scheduling of a multicast broadcast service (MBS) provided in an embodiment of the present disclosure. The method is applied to a terminal device. Based on the above-mentioned embodiment, as shown in FIG. 5, the method includes steps as follows.

In S501, configuration information for the semi-persistent scheduling of the MBS sent by a network device is received.

Regarding S501, the above-mentioned embodiment has been specifically introduced, which will not be elaborated herein.

In S502, one or multiple candidate semi-persistent resource sets are determined according to first configuration information. The configuration information includes the first configuration information used to configure the semi-persistent resource.

In this embodiment of the present disclosure, a candidate semi-persistent resource configured by the network device for the MBS is determined according to the first configuration information corresponding to the semi-persistent resource in the configuration information. The first configuration information includes the candidate semi-persistent resource set. The candidate semi-persistent resource set may be one or more. In the present disclosure, a candidate semi-persistent resource set indicated by the indication signaling is taken as the semi-persistent resource set.

In S503, an indication signaling of the MBS sent by the network device is monitored according to the configuration information. The indication signaling is configured to indicate the terminal device to activate or deactivate the semi-persistent resource.

Regarding S503, the above-mentioned embodiment has been specifically introduced, which will not be elaborated herein.

In S504, it is determined that the indication signaling indicates that the terminal device is activated, and the semi-persistent resource set indicated by the indication signaling is activated.

In this embodiment of the present disclosure, the candidate semi-persistent resource configured by the network device for the MBS is determined according to the first configuration information corresponding to the semi-persistent resource in the configuration information. The first configuration information includes the candidate semi-persistent resource set. There may be one or multiple candidate semi-persistent resource sets. A candidate semi-persistent resource set indicated by an activation indication signaling is taken as the semi-persistent resource set. The physical downlink shared channel (PDSCH) resource corresponding to the semi-persistent resource set is activated, and a corresponding MBS is received via the PDSCH. The semi-persistent resource set is one or more of the one or multiple candidate semi-persistent resource sets.

In an implementation, an identification of the semi-persistent resource set indicated by the indication signaling is determined, and each semi-persistent resource set is activated according to the identification of the semi-persistent resource set. One or more identifications may exist.

Alternatively, the indication signaling may explicitly indicate the identification of the semi-persistent resource set. For example, the SPS resource set-1 and the SPS resource set-2 shown in FIG. 4 are identifications of two candidate semi-persistent resource sets. When the activation indication signaling indicates activating the SPS resource set-1, the SPS resource set-1 is taken as the semi-persistent resource set. The activation indication signaling may indicate that merely the SPS resource set-1 is activated, indicate that merely the SPS resource set-2 is activated, and indicate that both the SPS resource set-1 and the SPS resource set-2 are activated at the same time.

Alternatively, the indication signaling may implicitly indicate the identification of the semi-persistent resource set. For example, the identification of the semi-persistent resource set may be a list item number in a semi-persistent resource set list. For example, in case that there are two semi-persistent resource sets in the semi-persistent resource set list, namely the SPS resource set-1 and the SPS resource set-2. The lists are arranged in order. A first semi-persistent resource set (SPS resource set-1) is numbered "1" and a second semi-persistent resource set (SPS resource set-2) is numbered "2". That is, in case that the activation indication signaling indicates activating "1", the terminal device activates the first semi-persistent resource set (SPS resource set-1). In case that the activation indication signaling indicates activating "2", the terminal device activates the second semi-persistent resource set (SPS resource set-2).

In another implementation, a group identification of a semi-persistent resource set group indicated by the indication signaling is determined. The semi-persistent resource set group includes at least one semi-persistent resource set. Each semi-persistent resource set included in the semi-persistent resource set group is activated according to the group identification.

Alternatively, the indication signaling may explicitly indicate the identification of the semi-persistent resource set group. For example, the SPS resource set-1 and the SPS resource set-2 shown in FIG. 4 may be combined as one semi-persistent resource set group, and a group identification of the semi-persistent resource set group may be denoted as SPS resource set group 1. When the indication signaling indicates activating the SPS resource set group 1, the SPS resource set-1 and the SPS resource set-2 contained in the SPS resource set group 1 are activated.

Alternatively, the indication signaling may implicitly indicate the identification of the semi-persistent resource set group. For example, the group identification of the semi-persistent resource set group may be a list item number in a semi-persistent resource set group list. For example, there are 4 semi-persistent resource sets in the semi-persistent resource set list, namely SPS resource set-1, SPS resource set-2, SPS resource set-3 and SPS resource set-4. The SPS resource set-1 and the SPS resource set-2 may be combined as one semi-persistent resource set group, and a group identification of the semi-persistent resource set group may be denoted as SPS resource set group 1. The SPS resource set-3 and the SPS resource set-4 may be combined as one semi-persistent resource set group, and a group identification of the semi-persistent resource set group may be denoted as SPS resource set group 2. The lists are arranged in order. A first semi-persistent resource set group (SPS resource set group 1) is numbered "1", and a second semi-persistent resource set group (SPS resource set group 2) is numbered "2". That is, in case that the activation indication signaling indicates activating "1", the terminal device activates the first semi-persistent resource set group (SPS resource set group 1). In case that the activation indication signaling indicates activating "2", the terminal device activates the second semi-persistent resource set group (SPS resource set group 2).

In S505, it is determined that the indication signaling indicates that the terminal device is deactivated, and the semi-persistent resource set indicated by the indication signaling is deactivated.

In this embodiment of the present disclosure, the candidate semi-persistent resource configured by the network device for the MBS is determined according to the first configuration information corresponding to the semi-persistent resources in the configuration information. The first configuration information includes the candidate semi-persistent resource set. There may be one or multiple candidate semi-persistent resource sets. A candidate semi-persistent resource set indicated by a deactivation indication signaling is taken as the semi-persistent resource set. The physical downlink shared channel (PDSCH) resource corresponding to the semi-persistent resource set is activated, and a corresponding MBS is received via the PDSCH. The semi-persistent resource set is one or more of the one or multiple candidate semi-persistent resource sets.

In an implementation, an identification of the semi-persistent resource set indicated by the indication signaling is determined, and each semi-persistent resource set is deactivated according to the identification of the semi-persistent resource set. One or more identifications may exist.

Alternatively, the indication signaling may explicitly indicate the identification of the semi-persistent resource set. For example, the SPS resource set-1 and the SPS resource set-2 shown in FIG. 4 are identifications of two candidate semi-persistent resource sets. When the deactivation indication signaling indicates to deactivate the SPS resource set-1, the SPS resource set-1 is taken as the semi-persistent resource set. The deactivation indication signaling may indicate that merely the SPS resource set-1 is deactivated, indicate that merely the SPS resource set-2 is deactivated, and indicate that both the SPS resource set-1 and the SPS resource set-2 are deactivated at the same time.

Alternatively, the indication signaling may implicitly indicate the identification of the semi-persistent resource set. For example, the identification of the semi-persistent resource set may be a list item number in a semi-persistent resource set list. For example, in case that there are two semi-persistent resource sets in the semi-persistent resource set list, namely the SPS resource set-1 and the SPS resource set-2. The lists are arranged in order. A first semi-persistent resource set (SPS resource set-1) is numbered "1" and a second semi-persistent resource set (SPS resource set-2) is numbered "2". That is, in case that the deactivation indication signaling indicates deactivating "1", the terminal device deactivates the first semi-persistent resource set (SPS Resource Set-1). In case that the deactivation indication signaling indicates deactivating "2", the terminal device deactivates the second semi-persistent resource set (SPS resource set-2).

In another implementation, a group identification of a semi-persistent resource set group indicated by the indication signaling is determined. The semi-persistent resource set group includes at least one semi-persistent resource set. Each semi-persistent resource set included in the semi-persistent resource set group is deactivated according to the group identification.

Alternatively, the indication signaling may explicitly indicate the identification of the semi-persistent resource set group. For example, the SPS resource set-1 and the SPS resource set-2 shown in FIG. 4 may be combined as one semi-persistent resource set group, and a group identification of the semi-persistent resource set group may be denoted as SPS resource set group 1. When the indication signaling indicates deactivating the SPS resource set group 1, the SPS resource set-1 and the SPS resource set-2 contained in the SPS resource set group 1 are deactivated.

Alternatively, the indication signaling may implicitly indicate the identification of the semi-persistent resource set group. For example, the group identification of the semi-persistent resource set group may be a list item number in a semi-persistent resource set group list. For example, there are 4 semi-persistent resource sets in the semi-persistent resource set list, namely SPS resource set-1, SPS resource set-2, SPS resource set-3 and SPS resource set-4. The SPS resource set-1 and the SPS resource set-2 may be combined as one semi-persistent resource set group, and a group identification of the semi-persistent resource set group may be denoted as SPS resource set group 1. The SPS resource set-3 and the SPS resource set-4 may be combined as one semi-persistent resource set group, and a group identification of the semi-persistent resource set group may be denoted as SPS resource set group 2. The lists are arranged in order. A first semi-persistent resource set group (SPS resource set group 1) is numbered "1", and a second semi-persistent resource set group (SPS resource set group 2) is numbered "2". That is, in case that the deactivation indication signaling indicates deactivating "1", the terminal device deactivates the first semi-persistent resource set group (SPS resource set group 1). In case that the deactivation indication signaling indicates deactivating "2", the terminal device deactivates the second semi-persistent resource set group (SPS resource set group 2).

The present disclosure provides the method for the semi-persistent scheduling of the multicast broadcast service (MBS). The terminal device receives the configuration information for the semi-persistent scheduling of the MBS sent by network device, and activate or deactivate the semi-persistent resource of the MBS according to the configuration information. In the present disclosure, the terminal device may receive the MBS data via the semi-persistently scheduled resource according to the different service characteristics. Thus, when the terminal device receives the MBS, the loss of the dynamic scheduling signaling may be reduced, and the reception delay of service data may be reduced at the same time.

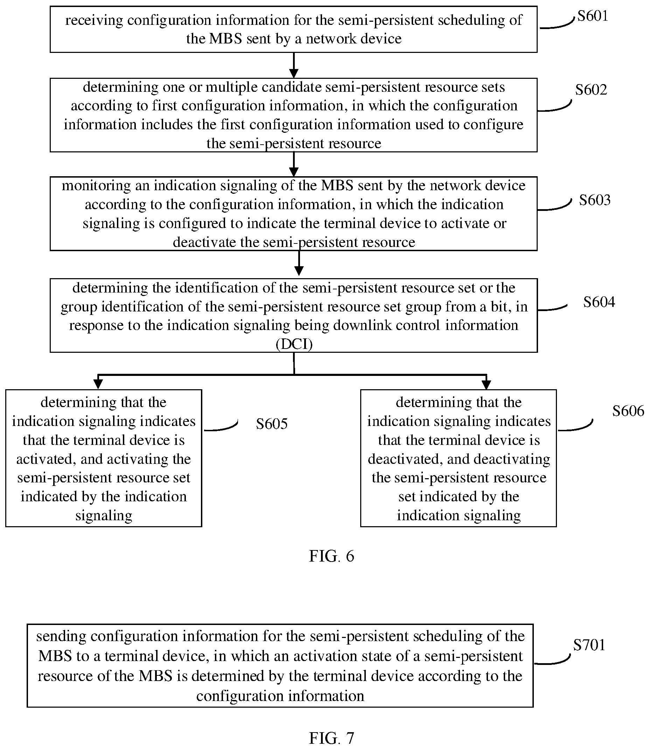

Referring to FIG. 6, FIG. 6 is a flow chart of a method for semi-persistent scheduling of a multicast broadcast service (MBS) provided in an embodiment of the present disclosure. The method is applied to a terminal device. Based on the above-mentioned embodiment, as shown in FIG. 6, the method includes steps as follows.

In S601, configuration information for the semi-persistent scheduling of the MBS sent by a network device is received.

Regarding S601, the above-mentioned embodiment has been specifically introduced, which will not be elaborated herein.

In S602, one or multiple candidate semi-persistent resource sets are determined according to first configuration information. The configuration information includes the first configuration information used to configure the semi-persistent resource.

Regarding S602, the above-mentioned embodiment has been specifically introduced, which will not be elaborated herein.

In S603, an indication signaling of the MBS sent by the network device is monitored according to the configuration information. The indication signaling is configured to indicate the terminal device to activate or deactivate the semi-persistent resource.

Regarding S603, the above-mentioned embodiment has been specifically introduced, which will not be elaborated herein.

In S604, the identification of the semi-persistent resource set or the group identification of the semi-persistent resource set group is determined from a bit, in response to the indication signaling being downlink control information (DCI).

In addition to the above-mentioned indication signaling directly indicating the terminal device to activate the semi-persistent resource, the indication signaling may also be the downlink control information (DCI). When the indication signaling is the DCI, the identification or the group identification may be determined from the bit.

In an implementation, the bit may be a reserved bit. The reserved bit is a bit reserved by an implementer for implementation.

In another implementation, the bit may be a bit in a hybrid automatic repeat request (HARQ) process number field. Alternatively, the identification or the group identification is directly acquired from the bit in the HARQ process number field. Alternatively, a HARQ process number is determined from the bit in the HARQ process number field, and the identification or the group identification is determined according to the HARQ process number.

In S605, it is determined that the indication signaling indicates that the terminal device is activated, and the semi-persistent resource set indicated by the indication signaling is activated.

Regarding S605, the above-mentioned embodiment has been specifically introduced, which will not be elaborated herein.

In S606, it is determined that the indication signaling indicates that the terminal device is deactivated, and the semi-persistent resource set indicated by the indication signaling is deactivated.

Regarding S606, the above-mentioned embodiment has been specifically introduced, which will not be elaborated herein.

In this embodiment of the present disclosure, the indication signaling of the MBS sent by the network device is monitored according to the configuration information, and the semi-persistent resource of the MBS is activated or deactivated according to the indication signaling. In the present disclosure, the terminal device may receive the MBS data via the semi-persistently scheduled resource according to the different service characteristics. Thus, when the terminal device receives the MBS, the loss of the dynamic scheduling signaling may be reduced, and the reception delay of service data may be reduced at the same time.

Referring to FIG. 7, FIG. 7 is a flow chart of a method for semi-persistent scheduling of a multicast broadcast service (MBS) provided in an embodiment of the present disclosure. The method is applied to a network device. As shown in FIG. 7, the method includes a step as follows
In S701, configuration information for the semi-persistent scheduling of the MBS is sent to a terminal device. An activation state of a semi-persistent resource of the MBS is determined by the terminal device according to the configuration information.

The network device sends the configuration information for the semi-persistent scheduling of the MBS to the terminal device. The activation state of the semi-persistent resource of the MBS is determined by the terminal device according to the configuration information. Regarding the configuration information for the semi-persistent scheduling, the above-mentioned embodiment has been specifically introduced, which will not be elaborated herein.

In this embodiment of the present disclosure, the network device sends the configuration information for the semi-persistent scheduling of the MBS to the terminal device, and the semi-persistent resource of the MBS is activated or deactivated according to the configuration information. In the present disclosure, the terminal device may receive MBS data via a semi-persistently scheduled resource according to different service characteristics. Thus, when the terminal device receives the MBS, the loss of a dynamic scheduling signaling may be reduced, and the reception delay of service data may be reduced at the same time.

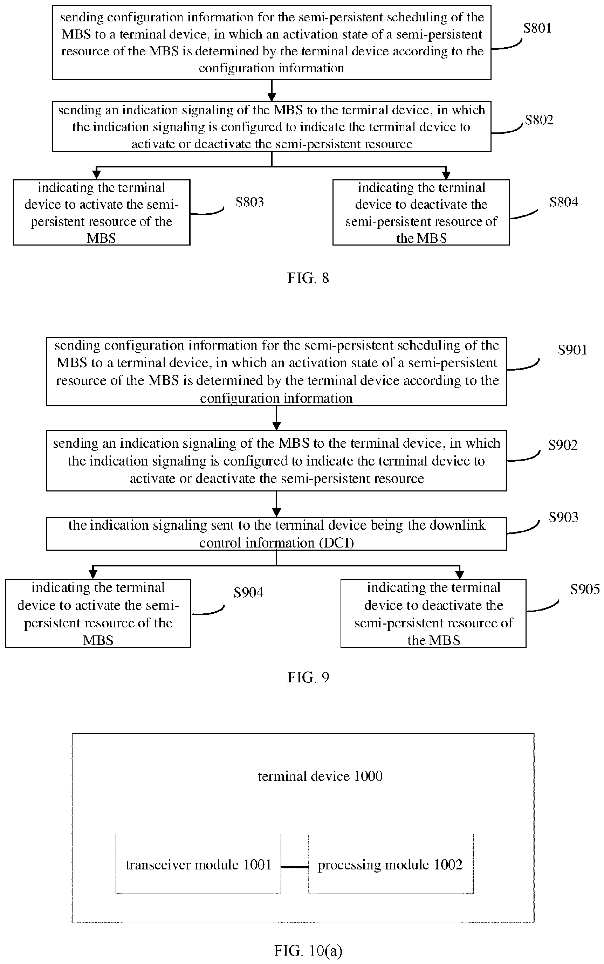

Referring to FIG. 8, FIG. 8 is a flow chart of a method for semi-persistent scheduling of a multicast broadcast service (MBS) provided in an embodiment of the present disclosure. The method is applied to a network device. Based on the above-mentioned embodiment, as shown in FIG. 8, the method includes steps as follows.

In S801, configuration information for the semi-persistent scheduling of the MBS is sent to a terminal device. An activation state of a semi-persistent resource of the MBS is determined by the terminal device according to the configuration information.

Regarding S801, the above-mentioned embodiment has been specifically introduced, which will not be elaborated herein.

In S802, an indication signaling of the MBS is sent to the terminal device. The indication signaling is configured to indicate the terminal device to activate or deactivate the semi-persistent resource.

The network device sends the indication signaling of the MBS to the terminal device. Regarding the indication signaling of the MBS, the above-mentioned embodiment has been specifically introduced, which will not be elaborated herein.

In S803, the terminal device is indicated to activate the semi-persistent resource of the MBS.

Alternatively, the network device sends a first indication signaling indicating an identification of at least one semi-persistent resource set to the terminal device. The first indication signaling is configured to indicate the terminal device to activate or deactivate each semi-persistent resource set. When configuring the identification of the semi-persistent resource set, explicit or implicit configuring may be adopted. Regarding the indication signaling indicating the identification and a process of the indication signaling indicating the terminal device to activate the semi-persistent resource, the above-mentioned embodiment has been specifically introduced, which will not be elaborated herein.

Alternatively, the network device sends a second indication signaling indicating a group identification of a semi-persistent resource set group to the terminal device. The semi-persistent resource set group includes at least one semi-persistent resource set. The second indication signaling is configured to indicate the terminal device to activate or deactivate each semi-persistent resource set included in the semi-persistent resource set group. When configuring the group identification of the semi-persistent resource set group, explicit or implicit configuring may be adopted. Regarding the indication signaling indicating the group identification and a process of the indication signaling indicating the terminal device to activate the semi-persistent resource, the above-mentioned embodiment has been specifically introduced, which will not be elaborated herein.

In S804, the terminal device is indicated to deactivate the semi-persistent resource of the MBS.

Alternatively, the network device sends a first indication signaling indicating an identification of at least one semi-persistent resource set to the terminal device. The first indication signaling is configured to indicate the terminal device to activate or deactivate each semi-persistent resource set. When configuring the identification of the semi-persistent resource set, explicit or implicit configuring may be adopted. Regarding the indication signaling indicating the identification and a process of the indication signaling indicating the terminal device to deactivate the semi-persistent resource, the above-mentioned embodiment has been specifically introduced, which will not be elaborated herein.

Alternatively, the network device sends a second indication signaling indicating a group identification of a semi-persistent resource set group to the terminal device. The semi-persistent resource set group includes at least one semi-persistent resource set. The second indication signaling is configured to indicate the terminal device to activate or deactivate each semi-persistent resource set included in the semi-persistent resource set group. When configuring the group identification of the semi-persistent resource set group, explicit or implicit configuring may be adopted. Regarding the indication signaling indicating the group identification and a process of the indication signaling indicating the terminal device to deactivate the semi-persistent resource, the above-mentioned embodiment has been specifically introduced, which will not be elaborated herein.

In this embodiment of the present disclosure, the network device sends the configuration information for the semi-persistent scheduling of the MBS to the terminal device, and the semi-persistent resource of the MBS is activated or deactivated according to the configuration information. In the present disclosure, the terminal device may receive the MBS data via the semi-persistently scheduled resource according to the different service characteristics. Thus, when the terminal device receives the MBS, the loss of the dynamic scheduling signaling may be reduced, and the reception delay of service data may be reduced at the same time.

Referring to FIG. 9, FIG. 9 is a flow chart of a method for semi-persistent scheduling of a multicast broadcast service (MBS) provided in an embodiment of the present disclosure. The method is applied to a network device. Based on the above-mentioned embodiment, as shown in FIG. 9, the method includes steps as follows.

In S901, configuration information for the semi-persistent scheduling of the MBS is sent to a terminal device. An activation state of a semi-persistent resource of the MBS is determined by the terminal device according to the configuration information.

Regarding S901, the above-mentioned embodiment has been specifically introduced, which will not be elaborated herein.

In S902, an indication signaling of the MBS is sent to the terminal device. The indication signaling is configured to indicate the terminal device to activate or deactivate the semi-persistent resource.

Regarding S902, the above-mentioned embodiment has been specifically introduced, which will not be elaborated herein.

In S903, the indication signaling sent to the terminal device is the downlink control information (DCI).

In addition to the above-mentioned indication signaling directly indicating the terminal device to activate or deactivate the semi-persistent resource, the indication signaling may also be the downlink control information (DCI). When the indication signaling is the DCI, the identification or the group identification is carried on a bit. The bit is one of a reserved bit and a bit in a HARQ process number field. Regarding the reserved bit and the bit in the HARQ process number field, the above-mentioned embodiment has been specifically introduced, which will not be elaborated herein.

In S904, the terminal device is indicated to activate the semi-persistent resource of the MBS.

Regarding S904, the above-mentioned embodiment has been specifically introduced, which will not be elaborated herein.

In S905, the terminal device is indicated to deactivate the semi-persistent resource of the MBS.

Regarding S905, the above-mentioned embodiment has been specifically introduced, which will not be elaborated herein.

In this embodiment of the present disclosure, the network device sends the configuration information for the semi-persistent scheduling of the MBS to the terminal device, and the semi-persistent resource of the MBS is activated or deactivated according to the configuration information. In the present disclosure, the terminal device may receive the MBS data via the semi-persistently scheduled resource according to the different service characteristics. Thus, when the terminal device receives the MBS, the loss of a dynamic scheduling signaling may be reduced, and the reception delay of service data may be reduced at the same time.

In the above-mentioned embodiments provided in the present disclosure, the methods provided in the embodiments of the present disclosure are introduced from perspectives of the network device and the terminal device, respectively. In order to realize various functions in the method provided in the above-mentioned embodiment of the present disclosure, the network device and the terminal device may include a hardware structure and a software module, and the above-mentioned various functions are realized in a form of a hardware structure, a software module, or a hardware structure plus a software module. A certain function in the above-mentioned various functions may be implemented in a form of a hardware structure, a software module, or a hardware structure plus a software module.

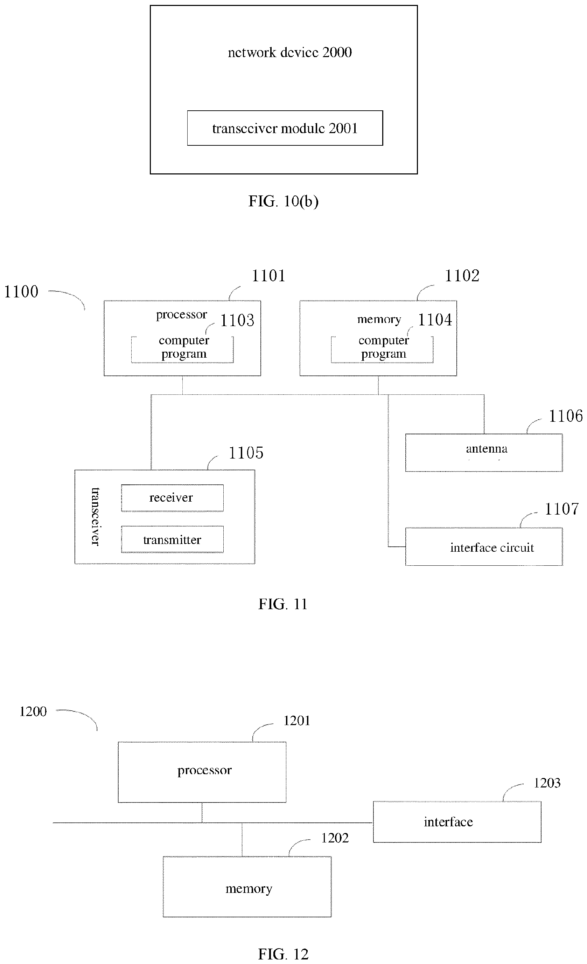

Referring to FIG. 10(a), FIG. 10(a) is a schematic diagram of a terminal device 1000 provided in an embodiment of the present disclosure. The terminal device 1000 shown in FIG. 10 may include a transceiver module 1001, and a processing module 1002.

The transceiver module 1001 may include a sending module and/or a receiving module. The sending module is configured to realize a sending function, and the receiving module is configured to realize a receiving function. The transceiver module 1001 may realize a sending function and/or a receiving function.

In the terminal device 1000, the transceiver module 1001 is configured to receive configuration information for semi-persistent scheduling of a multicast broadcast service (MBS) sent by a network device.

The processing module 1002 is configured to activate or deactivate a semi-persistent resource of the MBS according to the configuration information.

Alternatively, the processing module 1002 is further configured to monitor an indication signaling of the MBS sent by the network device according to the configuration information. The indication signaling is configured to indicate the terminal device to activate or deactivate the semi-persistent resource.

Alternatively, the processing module 1002 is further configured to determine one or multiple candidate semi-persistent resource sets according to first configuration information, in which the configuration information includes the first configuration information used to configure the semi-persistent resource, and activate or deactivate a semi-persistent resource set indicated by the indication signaling. The semi-persistent resource set is one or more of the one or multiple candidate semi-persistent resource sets.

Alternatively, the processing module 1002 is further configured to determine an identification of the semi-persistent resource set indicated by the indication signaling, in which one or more identifications exist, and activate or deactivate each semi-persistent resource according to the identification of the semi-persistent resource set.

Alternatively, the processing module 1002 is further configured to determine a group identification of a semi-persistent resource set group indicated by the indication signaling, in which the semi-persistent resource set group includes at least one semi-persistent resource set, and activate or deactivate each semi-persistent resource set included in the semi-persistent resource set group according to the group identification.

Alternatively, the processing module 1002 is further configured to determine that the identification of the semi-persistent resource set is a list item number in a semi-persistent resource set list.

Alternatively, the processing module 1002 is further configured to determine that the group identification of the semi-persistent resource set group is a list item number in a semi-persistent resource set group list.

Alternatively, the processing module 1002 is further configured to determine the identification or the group identification from a bit, in response to indication signaling being downlink control information (DCI). The bit is one of a reserved bit and a bit in a hybrid automatic repeat request (HARQ) process number field.

Alternatively, the processing module 1002 is further configured to directly acquire the identification or the group identification from the bit in the HARQ process number field, in case that the bit is the bit in the HARQ process number field, or determine a HARQ process number from the bit in the HARQ process number field, and determine the identification or the group identification according to the HARQ process number.

Alternatively, the processing module 1002 is further configured to determine second configuration information of the indication signaling according to the configuration information, and monitor the indication signaling according to the second configuration information.

Alternatively, the processing module 1002 is further configured to determine an identification of the indication signaling according to the second configuration information, and monitor the indication signaling according to the identification of the indication signaling.

Alternatively, the processing module 1002 is further configured to determine a discontinuous reception configuration of the indication signaling according to the second configuration information, and monitor the indication signaling according to the discontinuous reception configuration.

Alternatively, the processing module 1002 is further configured to determine a discontinuous reception cycle according to the discontinuous reception configuration, and monitor the indication signaling within a reception duration in the discontinuous reception cycle.

Alternatively, the processing module 1002 is further configured to determine a time domain reception graph within the reception duration according to the discontinuous reception configuration, and determine a monitoring time slot corresponding to the indication signaling according to the time domain reception graph, and monitor the indication signaling in the monitoring time slot.

Alternatively, the processing module 1002 is further configured to determine that the configuration information includes an identification of the MBS, first configuration information of the semi-persistent resource, and second configuration information for the indication signaling for activating or deactivating the semi-persistent resource.

Alternatively, the processing module 1002 is further configured to determine that the second configuration information includes an identification of the indication signaling and a discontinuous reception configuration for monitoring the indication signaling.

Alternatively, the processing module 1002 is further configured to determine that the discontinuous reception configuration includes a discontinuous reception cycle and a reception duration in the discontinuous reception cycle.

Alternatively, the processing module 1002 is further configured to determine that the discontinuous reception configuration includes a time domain reception graph within the reception duration. The time domain reception graph includes a monitoring time slot corresponding to the indication signaling and an occupied time slot corresponding to the semi-persistent resource.

Referring to FIG. 10(b), FIG. 10(b) is a schematic diagram of a network device 2000 provided in an embodiment of the present disclosure.

The network device 2000 includes a transceiver module 2001 configured to send configuration information for semi-persistent scheduling of a multicast broadcast service (MBS) to a terminal device. An activation state of a semi-persistent resource of the MBS is determined by the terminal device according to the configuration information.

Alternatively, the transceiver module 2001 is further configured to send an indication signaling of the MBS to the terminal device. The indication signaling is configured to indicate the terminal device to activate or deactivate the semi-persistent resource.

Alternatively, the transceiver module 2001 is further configured to send the configuration information. The configuration information includes an identification of the MBS, first configuration information of the semi-persistent resource, and second configuration information for the indication signaling for activating or deactivating the semi-persistent resource.

Alternatively, the transceiver module 2001 is further configured to send the second configuration information. The second configuration information includes an identification of the indication signaling and a discontinuous reception configuration for monitoring the indication signaling.

Alternatively, the transceiver module 2001 is further configured to send the discontinuous reception configuration. The discontinuous reception configuration includes a discontinuous reception cycle and a reception duration in the discontinuous reception cycle.

Alternatively, the transceiver module 2001 is further configured to send the discontinuous reception configuration. The discontinuous reception configuration includes a time domain reception graph within the reception duration. The time domain reception graph includes a monitoring time slot corresponding to the indication signaling and an occupied time slot corresponding to the semi-persistent resource.

Alternatively, the transceiver module 2001 is further configured to send a first indication signaling indicating an identification of at least one semi-persistent resource set to the terminal device, in which the first indication signaling is configured to indicate the terminal device to activate or deactivate each semi-persistent resource set, and the semi-persistent resource set is one or more of the one or multiple candidate semi-persistent resource sets, or send a second indication signaling indicating a group identification of a semi-persistent resource set group to the terminal device. The semi-persistent resource set group includes at least one semi-persistent resource set. The second indication signaling is configured to indicate the terminal device to activate or deactivate each semi-persistent resource set included in the semi-persistent resource set group.

Alternatively, the transceiver module 2001 is further configured to explicitly or implicitly configure the identification of the semi-persistent resource set and the group identification of the semi-persistent resource set group.

Alternatively, the transceiver module 2001 is further configured to send the implicitly configuring. The implicitly configuring includes configuring a list item number in a semi-persistent resource set list as the identification of the semi-persistent resource set, or configuring a list item number in a semi-persistent resource set group list as the group identification of the semi-persistent resource set group.

Alternatively, the transceiver module 2001 is further configured to carry the identification or the group identification on a bit, in response to indication signaling being downlink control information (DCI). The bit is one of a reserved bit and a bit in a hybrid automatic repeat request (HARQ) process number field.

Alternatively, the transceiver module 2001 is further configured to directly carry the identification or the group identification on the bit in the HARQ process number field, in case that the bit in the HARQ process number field is taken as the bit, or carry a HARQ process number on the bit in the HARQ process number field. The HARQ process number is used by the terminal device for determining the identification or the group identification.

Referring to FIG. 11, FIG. 11 is a schematic diagram of another communication device 1100 provided in an embodiment of the present disclosure. The communication device 1100 may be a network device, may be a terminal device, may be a chip, a chip system, or a processor that supports the network device to implement the above-mentioned method, and may also be a chip, a chip system, or a processor that supports the terminal device to implement the above-mentioned method. The apparatus may be configured to implement the method described in the above-mentioned method embodiment. For details, reference may be made to the description in the above-mentioned method embodiment.

The communication device 1100 may include one or more processors 1101. The processor 1101 may be a generic processor, a specific processor, or the like. For example, the processor 1101 may be a baseband processor or a central processor. The baseband processor may be configured to process a communication protocol and communication data, and the central processor may be configured to control a communication device (such as, a base station, a baseband chip, a terminal, a terminal chip, a DU, or a CU, etc.), execute computer programs, and process data of the computer programs.

Alternatively, the communication device 1100 may further include one or more memories 1102, on which a computer program 1104 may be stored, and the processor 1101 executes the computer program 1104, so that the communication device 1100 executes the method described in the above-mentioned method embodiments. Alternatively, data may also be stored in the memory 1102. The communication device 1100 and the memory 1102 may be set separately or integrated together.

Alternatively, the communication device 1100 may further include a transceiver 1105 and an antenna 1106. The transceiver 1105 may be referred to as a transceiver unit, a transceiver machine, or a transceiver circuit, etc., and is configured to realize a transceiver function. The transceiver 1105 may include a receiver and a transmitter. The receiver may be referred to as a receiver machine or a receiving circuit, etc., for realizing a receiving function. The transmitter may be referred to as a transmitting machine or a transmitting circuit, etc., and is configured to realize a transmitting function.

Alternatively, the communication device 1100 may further include one or more interface circuits 1107. The interface circuit 1107 is configured to receive code instructions and transmit the code instructions to the processor 1101. The processor 1101 executes the code instructions to enable the communication device 1100 to perform the method described in the above-mentioned method embodiments.

The communication device 1100 is a terminal device. The processor 1101 is configured to execute step S202 in FIG. 2, execute step S303 in FIG. 3, and execute step S504 in FIG. 5. The transceiver 1105 is configured to execute step S201 in FIG. 2.

The communication device 1100 is a network device. The transceiver 1105 is configured to execute step S701 in FIG. 7, and execute step S801 in FIG. 8.

In an implementation, the processor 1101 may include a transceiver configured to receive and transmit functions. For example, the transceiver may be a transceiver circuit, an interface, or an interface circuit. The transceiver circuit, the interface, or the interface circuit configured to receive and transmit the functions may be separated or integrated together. The transceiver circuit, the interface, or the interface circuit may be configured to read and write codes/data, or the transceiver circuit, the interface, or the interface circuit may be configured for signal transmission or transfer.

In an implementation, the processor 1101 may store a computer program 1103, and the computer program 1103 runs on the processor 1101, which may cause the communication device 1100 execute the method described in the above-mentioned method embodiments. The computer program 1103 may be solidified in the processor 1101, and in this case, the processor 1101 may be implemented by hardware.

In an implementation, the communication device 1100 may include a circuit, and the circuit may realize a function of transmitting, receiving or communicating in the above-mentioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and the transceiver may also be manufactured by using various IC process technologies, such as complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above-mentioned embodiment may be the network device or the terminal device, but the scope of the communication device described in the present disclosure is not limited thereto, and a structure of the communication device may not be limited by FIG. 11. The communication device may be a stand-alone device or may be part of a larger device. For example, the communication device may be: (1) a stand-alone integrated circuit (IC), a chip, or a chip system or a subsystem, (2) a set of one or more ICs, additionally, the set of the IC may also include storage components for storing data and computer programs, (3) an ASIC, such as a modem, (4) a module that may be embedded in other devices, (5) a receiver, a terminal, an intelligent terminal, a cellular phone, a wireless device, a handset, a mobile unit, a vehicle-mounted device, a network device, a cloud equipment, an artificial intelligence device, etc., (6) other devices, and so on.

For a case that the communication device may be a chip or a chip system, reference may be made to the schematic diagram of the chip shown in FIG. 12. The chip shown in FIG. 12 includes a processor 1201 and an interface 1202. A number of processors 1201 may be one or multiple, and a number of interfaces 1202 may be multiple.

For a case that the chip is configured to realize functions of the terminal device in the embodiments of the present disclosure, the interface 1202 configured to execute step S202 in FIG. 2, configured to execute step S303 in FIG. 3, and configured to execute step S504 in FIG. 5.

For a case that the chip is configured to realize functions of the network device in the embodiments of the present disclosure, the interface 1202 configured to execute step S701 in FIG. 7, and configured to execute step S801 in FIG. 8.

Alternatively, the chip further includes a memory 1203 for storing necessary computer programs and data.

Those skilled in the art may also understand that various illustrative logical blocks and steps listed in the embodiments of the present disclosure may be implemented by electronic hardware, computer software, or a combination thereof. Whether this function is realized by hardware or software depends on a specific application and design requirements of the whole system. Those skilled in the art may use various methods to realize the described functions for each specific application, but this realization should not be understood as beyond the scope of protection of the embodiments of the present disclosure.

An embodiment of the present disclosure also provides a system for semi-persistent scheduling of a multicast broadcast service (MBS). The system includes a communication device as a terminal device and a communication device as a network device in the above-mentioned embodiments of FIG. 10(a) and FIG. 10(b). Alternatively, the system includes a communication device as a terminal device and a communication device as a network device in the above-mentioned embodiments of FIG. 11.

The present disclosure also provides a readable storage medium having stored therein instructions that, when executed by a computer, cause functions of any one of the above-mentioned method embodiments to be implemented.

The present disclosure also provides a computer program product that, when executed by a computer, cause functions of any one of the above-mentioned method embodiments to be implemented.

In the above-mentioned embodiments, all or part of the functions may be realized by software, hardware, firmware or any combination thereof. When the functions is realized by using software, all or part of the functions may be realized in a form of a computer program product. The computer program product includes one or more computer programs. When the computer program is loaded and executed on a computer, all or part of the functions is generated according to the processes or functions of the embodiments of the present disclosure. The computer may be a generic computer, a specific computer, a computer network, or other programmable devices. The computer program may be stored in the computer-readable storage medium or transmitted from one computer-readable storage medium to another computer-readable storage medium. For example, the computer program may be transmitted from a website, a computer, a server or a data center to another website, another computer, another server or another data center in a wired (for example, a coaxial cable, an optical fiber, a digital subscriber line (DSL)) or wireless (for example, infrared, wireless, microwave, etc.) manner. The computer-readable storage medium may be any available medium that may be accessed by a computer or integrated with a data storage device such as a server, a data center that contains one or more available media. The available medium may be a magnetic medium (for example, a floppy disk, a hard disk, a magnetic tape), an optical medium (for example, a high-density digital video disc (DVD)), or a semiconductor medium (for example, a solid state disk (SSD)), etc.

It may be understood by those of ordinary skill in the art that numerical numbers such as the first, the second and the like involved in the present disclosure are merely a convenient distinction for description, and are not used to limit the scope of the embodiments of the present disclosure, but also indicate the sequence.

At least one of the present disclosure may also be described as one or plurality, and the plurality may be two, three, four or more, which is not limited in the present disclosure. In an embodiment of the present disclosure, for one technical feature, a technical feature in the technical feature is distinguished by "first," "second," "third," "A," "B," "C," and "D". There is no precedence or magnitude order between the technical features described by "first," "second," "third," "A," "B," "C," and "D".

A correspondence shown in each table in the present disclosure may be configured or predefined. Values of the information in each table are merely examples, and may be configured as other values, which is not limited in the present disclosure. When configuring a correspondence between information and parameters, it is not necessary to configure all correspondences shown in each table. For example, in the table in the present disclosure, a correspondence shown in some rows may not be configured. For another example, appropriate deformation adjustments may be made based on the above-mentioned table, such as splitting, merging, and so on. Names of the parameters shown in the titles of the above-mentioned tables may also adopt other names that may be understood by the communication device, and values or representations of the parameters may also be other values or representations that may be understood by the communication device. Other data structures may also be adopted when the above-mentioned tables are implemented, such as arrays, queues, containers, stacks, linear tables, pointers, linked lists, trees, graphs, structures, classes, heaps, hash tables, etc.

The pre-definition in the present disclosure may be understood as definition, definition in advance, storage, pre-storage, pre-negotiation, pre-configuration, curing, or pre-firing.

Those of ordinary skill in the art may appreciate that units and algorithm steps of various examples described in conjunction with the embodiments disclosed herein may be implemented in electronic hardware, or a combination of computer software and electronic hardware. Whether these functions are executed in hardware or software depends on the specific application and design constraints of the technical solution. Those skilled in the art may use different methods to implement the described functions for each specific application, but such implementation should not be considered beyond the scope of the present disclosure.

It may be clearly understood by those skilled in the art that for the convenience and conciseness of the description, specific working processes of the above-described systems, the apparatuses and the units may refer to corresponding processes in the above-mentioned method embodiments, which will not be elaborated herein.

The above is merely the specific implementation of the present disclosure, and the scope of the protection of the present disclosure is not limited thereto. Changes or substitutions will readily occur to those skilled in the art within the technical scope of the present disclosure, which is to be covered the scope of protection of the present disclosure. Therefore, the scope of protection of the present disclosure is as set forth in the scope of protection of the claims.

## Claims

1. A method for semi-persistent scheduling of a multicast broadcast service (MBS), performed by a terminal device, comprising:
receiving configuration information for the semi-persistent scheduling of the MBS sent by a network device; and
activating or deactivating a semi-persistent resource of the MBS according to the configuration information.

2. The method of claim 1, further comprising:
monitoring an indication signaling of the MBS sent by the network device according to the configuration information, wherein the indication signaling is configured to indicate the terminal device to activate or deactivate the semi-persistent resource.

3. The method of claim 2, further comprising:
determining one or multiple candidate semi-persistent resource sets according to first configuration information, wherein the configuration information comprises the first configuration information used to configure the semi-persistent resource; and
activating or deactivating a semi-persistent resource set indicated by the indication signaling, wherein the semi-persistent resource set is one or more of the one or multiple candidate semi-persistent resource sets.

4. The method of claim 3, further comprising:
determining an identification of the semi-persistent resource set indicated by the indication signaling, wherein one or more identifications exist; and
activating or deactivating each semi-persistent resource according to the identification of the semi-persistent resource set.

5. The method of claim 3, further comprising:
determining a group identification of a semi-persistent resource set group indicated by the indication signaling, wherein the semi-persistent resource set group comprises at least one semi-persistent resource set; and
activating or deactivating each semi-persistent resource set comprised in the semi-persistent resource set group according to the group identification.

6. The method of claim 4 or 5, wherein the identification of the semi-persistent resource set is a list item number in a semi-persistent resource set list.

7. The method of claim 4 or 5, wherein the group identification of the semi-persistent resource set group is a list item number in a semi-persistent resource set group list.

8. The method of claim 6 or 7, further comprising:
determining the identification or the group identification from a bit, wherein the bit is one of a reserved bit and a bit in a hybrid automatic repeat request (HARQ) process number field, and the indication signaling is downlink control information (DCI).

9. The method of claim 8, further comprising:
directly acquiring the identification or the group identification from the bit in the HARQ process number field, in case that the bit is the bit in the HARQ process number field; or
determining a HARQ process number from the bit in the HARQ process number field, and determining the identification or the group identification according to the HARQ process number.

10. The method of any one of claims 2 to 9, wherein monitoring the indication signaling of the MBS sent by the network device according to the configuration information comprises:
monitoring the indication signaling according to second configuration information, wherein the configuration information comprises the second configuration information for the indication signaling for activating or deactivating the semi-persistent resource.

11. The method of claim 10, further comprising:
determining an identification of the indication signaling according to the second configuration information, and monitoring the indication signaling according to the identification of the indication signaling.

12. The method of claim 10, further comprising:
determining a discontinuous reception configuration of the indication signaling according to the second configuration information; and
monitoring the indication signaling according to the discontinuous reception configuration.

13. The method of claim 12, further comprising:
determining a discontinuous reception cycle according to the discontinuous reception configuration; and
monitoring the indication signaling within a reception duration in the discontinuous reception cycle.

14. The method of claim 12 or 13, further comprising:
determining a time domain reception graph within the reception duration according to the discontinuous reception configuration; and
determining a monitoring time slot corresponding to the indication signaling according to the time domain reception graph, and monitoring the indication signaling in the monitoring time slot.

15. The method of any one of claims 1 to 14, wherein the configuration information comprises:
an identification of the MBS;
first configuration information of the semi-persistent resource; and
second configuration information for the indication signaling for activating or deactivating the semi-persistent resource.

16. The method of claim 15, wherein the second configuration information comprises an identification of the indication signaling and a discontinuous reception configuration for monitoring the indication signaling.

17. The method of claim 16, wherein the discontinuous reception configuration comprises a discontinuous reception cycle and a reception duration in the discontinuous reception cycle.

18. The method of claim 17, wherein the discontinuous reception configuration comprises a time domain reception graph within the reception duration, wherein the time domain reception graph comprises a monitoring time slot corresponding to the indication signaling and an occupied time slot corresponding to the semi-persistent resource.

19. A method for semi-persistent scheduling of a multicast broadcast service (MBS), performed by a network device, comprising:
sending configuration information for the semi-persistent scheduling of the MBS to a terminal device, wherein an activation state of a semi-persistent resource of the MBS is determined by the terminal device according to the configuration information.

20. The method of claim 19, further comprising:
sending an indication signaling of the MBS to the terminal device, wherein the indication signaling is configured to indicate the terminal device to activate or deactivate the semi-persistent resource.

21. The method of claim 20, wherein the configuration information comprises:
an identification of the MBS;
first configuration information of the semi-persistent resource; and
second configuration information for the indication signaling for activating or deactivating the semi-persistent resource.

22. The method of claim 21, wherein the second configuration information comprises an identification of the indication signaling and a discontinuous reception configuration for monitoring the indication signaling.

23. The method of claim 22, wherein the discontinuous reception configuration comprises a discontinuous reception cycle and a reception duration in the discontinuous reception cycle.

24. The method of claim 23, wherein the discontinuous reception configuration comprises a time domain reception graph within the reception duration, wherein the time domain reception graph comprises a monitoring time slot corresponding to the indication signaling and an occupied time slot corresponding to the semi-persistent resource.

25. The method of claim 21, wherein the first configuration information comprises one or multiple candidate semi-persistent resource sets, wherein the method further comprises:
sending a first indication signaling indicating an identification of at least one semi-persistent resource set to the terminal device, wherein the first indication signaling is configured to indicate the terminal device to activate or deactivate each semi-persistent resource set, wherein the semi-persistent resource set is one or more of the one or multiple candidate semi-persistent resource sets; or
sending a second indication signaling indicating a group identification of a semi-persistent resource set group to the terminal device, wherein the semi-persistent resource set group comprises at least one semi-persistent resource set, wherein the second indication signaling is configured to indicate the terminal device to activate or deactivate each semi-persistent resource set comprised in the semi-persistent resource set group.

26. The method of claim 25, further comprising:
explicitly or implicitly configuring the identification of the semi-persistent resource set and the group identification of the semi-persistent resource set group.

27. The method of claim 26, wherein the implicitly configuring comprises:
configuring a list item number in a semi-persistent resource set list as the identification of the semi-persistent resource set; or
configuring a list item number in a semi-persistent resource set group list as the group identification of the semi-persistent resource set group.

28. The method of claim 27, further comprising:
carrying the identification or the group identification on a bit, wherein the bit is one of a reserved bit and a bit in a hybrid automatic repeat request (HARQ) process number field, and the indication signaling is downlink control information (DCI).

29. The method of claim 28, further comprising:
directly carrying the identification or the group identification on the bit in the HARQ process number field, in case that the bit in the HARQ process number field is taken as the bit; or
carrying a HARQ process number on the bit in the HARQ process number field, wherein the HARQ process number is used by the terminal device for determining the identification or the group identification.

30. A terminal device, comprising:
a transceiver module configured to receive configuration information for semi-persistent scheduling of a multicast broadcast service (MBS) sent by a network device; and
a processing module configured to activate or deactivate a semi-persistent resource of the MBS according to the configuration information.

31. The terminal device of claim 30, wherein the processing module is further configured to:
monitor an indication signaling of the MBS sent by the network device according to the configuration information, wherein the indication signaling is configured to indicate the terminal device to activate or deactivate the semi-persistent resource.

32. The terminal device of claim 31, wherein the processing module is further configured to:
determine one or multiple candidate semi-persistent resource sets according to first configuration information, wherein the configuration information comprises the first configuration information used to configure the semi-persistent resource; and
activate or deactivate a semi-persistent resource set indicated by the indication signaling, wherein the semi-persistent resource set is one or more of the one or multiple candidate semi-persistent resource sets.

33. The terminal device of claim 32, wherein the processing module is further configured to:
determine an identification of the semi-persistent resource set indicated by the indication signaling, wherein one or more identifications exist; and
activate or deactivate each semi-persistent resource according to the identification of the semi-persistent resource set.

34. The terminal device of claim 32, wherein the processing module is further configured to:
determine a group identification of a semi-persistent resource set group indicated by the indication signaling, wherein the semi-persistent resource set group comprises at least one semi-persistent resource set; and
activate or deactivate each semi-persistent resource set comprised in the semi-persistent resource set group according to the group identification.

35. The terminal device of claim 33 or 34, wherein the identification of the semi-persistent resource set is a list item number in a semi-persistent resource set list.

36. The terminal device of claim 33 or 34, wherein the group identification of the semi-persistent resource set group is a list item number in a semi-persistent resource set group list.

37. The terminal device of claim 35 or 36, wherein the processing module is further configured to:
determine the identification or the group identification from a bit, wherein the bit is one of a reserved bit and a bit in a hybrid automatic repeat request (HARQ) process number field, and the indication signaling is downlink control information (DCI).

38. The terminal device of claim 37, wherein the processing module is further configured to:
directly acquire the identification or the group identification from the bit in the HARQ process number field, in case that the bit is the bit in the HARQ process number field; or
determine a HARQ process number from the bit in the HARQ process number field, and determine the identification or the group identification according to the HARQ process number.

39. The terminal device of any one of claims 31 to 38, wherein the processing module is further configured to:
monitor the indication signaling according to second configuration information, wherein the configuration information comprises the second configuration information for the indication signaling for activating or deactivating the semi-persistent resource.

40. The terminal device of claim 39, wherein the processing module is further configured to:
determine an identification of the indication signaling according to the second configuration information, and monitor the indication signaling according to the identification of the indication signaling.

41. The terminal device of claim 39, wherein the processing module is further configured to:
determine a discontinuous reception configuration of the indication signaling according to the second configuration information; and
monitor the indication signaling according to the discontinuous reception configuration.

42. The terminal device of claim 41, wherein the processing module is further configured to:
determine a discontinuous reception cycle according to the discontinuous reception configuration; and
monitor the indication signaling within a reception duration in the discontinuous reception cycle.

43. The terminal device of claim 41 or 42, wherein the processing module is further configured to:
determine a time domain reception graph within the reception duration according to the discontinuous reception configuration; and
determine a monitoring time slot corresponding to the indication signaling according to the time domain reception graph, and monitor the indication signaling in the monitoring time slot.

44. The terminal device of any one of claims 30 to 43, wherein the configuration information comprises:
an identification of the MBS;
first configuration information of the semi-persistent resource; and
second configuration information for the indication signaling for activating or deactivating the semi-persistent resource.

45. The terminal device of claim 44, wherein the second configuration information comprises an identification of the indication signaling and a discontinuous reception configuration for monitoring the indication signaling.

46. The terminal device of claim 45, wherein the discontinuous reception configuration comprises a discontinuous reception cycle and a reception duration in the discontinuous reception cycle.

47. The terminal device of claim 46, wherein the discontinuous reception configuration comprises a time domain reception graph within the reception duration, wherein the time domain reception graph comprises a monitoring time slot corresponding to the indication signaling and an occupied time slot corresponding to the semi-persistent resource.

48. A network device, comprising:
a transceiver module configured to send configuration information for semi-persistent scheduling of a multicast broadcast service (MBS) to a terminal device, wherein an activation state of a semi-persistent resource of the MBS is determined by the terminal device according to the configuration information.

49. The network device of claim 48, wherein the transceiver module is further configured to:
send an indication signaling of the MBS to the terminal device, wherein the indication signaling is configured to indicate the terminal device to activate or deactivate the semi-persistent resource.

50. The network device of claim 49, wherein the configuration information comprises:
an identification of the MBS;
first configuration information of the semi-persistent resource; and
second configuration information for the indication signaling for activating or deactivating the semi-persistent resource.

51. The network device of claim 50, wherein the second configuration information comprises an identification of the indication signaling and a discontinuous reception configuration for monitoring the indication signaling.

52. The network device of claim 51, wherein the discontinuous reception configuration comprises a discontinuous reception cycle and a reception duration in the discontinuous reception cycle.

53. The network device of claim 52, wherein the discontinuous reception configuration comprises a time domain reception graph within the reception duration, wherein the time domain reception graph comprises a monitoring time slot corresponding to the indication signaling and an occupied time slot corresponding to the semi-persistent resource.

54. The network device of claim 50, wherein the first configuration information comprises one or multiple candidate semi-persistent resource sets, wherein the transceiver is further configured to:
send a first indication signaling indicating an identification of at least one semi-persistent resource set to the terminal device, wherein the first indication signaling is configured to indicate the terminal device to activate or deactivate each semi-persistent resource set, wherein the semi-persistent resource set is one or more of the one or multiple candidate semi-persistent resource sets; or
send a second indication signaling indicating a group identification of a semi-persistent resource set group to the terminal device, wherein the semi-persistent resource set group comprises at least one semi-persistent resource set, wherein the second indication signaling is configured to indicate the terminal device to activate or deactivate each semi-persistent resource set comprised in the semi-persistent resource set group.

55. The network device of claim 54, wherein the transceiver is further configured to:
explicitly or implicitly configure the identification of the semi-persistent resource set and the group identification of the semi-persistent resource set group.

56. The network device of claim 55, wherein the implicitly configuring comprises:
configuring a list item number in a semi-persistent resource set list as the identification of the semi-persistent resource set; or
configuring a list item number in a semi-persistent resource set group list as the group identification of the semi-persistent resource set group.

57. The network device of claim 56, wherein it is further configured to:
carry the identification or the group identification on a bit, wherein the bit is one of a reserved bit and a bit in a hybrid automatic repeat request (HARQ) process number field, and the indication signaling is downlink control information (DCI).

58. The network device of claim 57, wherein it is further configured to:
directly carry the identification or the group identification on the bit in the HARQ process number field, in case that the bit in the HARQ process number field is taken as the bit; or
carry a HARQ process number on the bit in the HARQ process number field, wherein the HARQ process number is used by the terminal device for determining the identification or the group identification.

59. A communication device, comprising:
a processor; and
a memory having stored therein computer programs,
wherein the processor is configured to execute the computer programs stored in the memory to cause the communication device to perform the method of any one of claims 1 to 18.

60. A communication device, comprising:
a processor; and
a memory having stored therein computer programs,
wherein the processor is configured to execute the computer programs stored in the memory to cause the communication device to perform the method of any one of claims 19 to 29.

61. A communication device, comprising:
a processor; and
an interface circuit configured to receive code instructions and transmit the code instructions to the processor;
wherein the processor is configured to run the code instructions to perform the method of any one of claims 1 to 18.

62. A communication device, comprising:
a processor; and
an interface circuit configured to receive code instructions and transmit the code instructions to the processor;
wherein the processor is configured to run the code instructions to perform the method of any one of claims 19 to 29.

63. A computer-readable storage medium having stored therein instructions that, when executed, cause the method of any one of claims 1 to 18 to be implemented.

64. A computer-readable storage medium having stored therein instructions that, when executed, cause the method of any one of claims 19 to 29 to be implemented.
